# EUROPÄISCHE PATENTSCHRIFT

(11) **EP 3 394 479 B1**
(45) Veröffentlichungstag und Bekanntmachung des Hinweises auf die Patenterteilung: **25.11.2020**
(21) Anmeldenummer: 16805418.7
(22) Anmeldetag: 02.12.2016
(51) Int. Cl.: F16H 61/56, F16H 41/26

(54) **HYDRODYNAMISCHER WANDLER**
HYDRODYNAMIC CONVERTER
CONVERTISSEUR HYDRODYNAMIQUE

(30) Priorität: 23.12.2015 DE 102015226638
(43) Veröffentlichungstag der Anmeldung: 31.10.2018
(73) Patentinhaber: Voith Patent GmbH, 89522 Heidenheim (DE)
(72) Erfinder: FIGLER, Thomas, 74564 Crailsheim (DE)
(74) Vertreter: Voith Patent GmbH - Patentabteilung
(86) Internationale Anmeldenummer: PCT/EP2016/079532
(87) Internationale Veröffentlichungsnummer: WO 2017/108373

(56) Entgegenhaltungen:
- DE-A1- 2 505 092
- DE-A1-102008 039 521
- DE-B3-102004 011 033
- JP-A- S5 769 162
- US-A- 2 995 955
- US-A- 4 009 571
- US-A- 5 307 629

## Beschreibung

Die vorliegende Erfindung betrifft einen hydrodynamischen Wandler mit den Merkmalen des Oberbegriffs des Anspruchs 1. Ein gattungsgemäßer Wandler ist bspw. aus J.M.Voith GmbH: "Hydrodynamik in der Antriebstechnik", Bild 1.10; Vereinigte Fachverlage, Krausskopf-Ingenieur Digest 1987 bekannt.

Hydrodynamische Drehzahl- und/oder Drehmomentwandler, kurz auch als Wandler bezeichnet, weisen mindestens drei Schaufelräder auf, d.h. ein Pumpenrad, ein Turbinenrad und ein Leitrad, die eine in einem Arbeitsraum umlaufende Strömung umlenken. Das Leitrad ist dabei mit einem ortsfesten Gehäuse verbunden oder stützt sich über einen Freilauf an diesem ab. Verfügt der Wandler über eine Einrichtung, die eine Veränderung der Kreislaufströmung im Betrieb ermöglicht, so handelt es sich um einen beeinflussbaren Wandler. Ein Beispiel für einen derartigen Wandler ist der Stellwandler, dessen Schaufeln im Betrieb von außen verstellt werden können.

Aus der Druckschrift DE 10 2004 011 033 B3 ist eine Ausführung eines mehrstufigen und mehrteiligen Wandlers vorbekannt, bei welchem mehr als ein Leitrad vorgesehen ist. Die einzelnen von diesen gebildeten Schaufelkränze sind auf unterschiedlichen Durchmessern und unterschiedlichen Stellen im Strömungskreislauf angeordnet. Insgesamt sind drei Leitschaufelkränze vorgesehen, die im Strömungskreislauf an unterschiedlichen Stellen zwischen Pumpen- und Turbinenrad zum Einsatz gelangen. Dabei ist ein erster Schaufelkranz eines ersten Leitrades im Strömungskreislauf zwischen Pumpen- und Turbinenrad auf einem größeren und damit radial äußeren Durchmesser angeordnet, während die anderen beiden Schaufelkränze auf einem radial inneren Durchmesser in Durchströmungsrichtung zwischen Turbinen- und Pumpenrad an einem Leitrad oder mehreren axial nebeneinander angeordneten Leiträdern angeordnet sind. Einer der beiden radial inneren Schaufelkränze ist feststehend, der andere weist Stellschaufeln auf. Die Verstellung erfolgt über eine Verstellvorrichtung, umfassend eine Verstellwelle, welche in radialer Richtung sich vom Außenumfang durch den Kernraum bis zum radial inneren Schaufelkranz mit Stellschaufel erstreckend angeordnet ist, wobei die Betätigungseinrichtung für die Verstellwelle in radialer Richtung am Außenumfang des Wandlers angeordnet ist. Diese Verstellvorrichtung ist durch eine einen hohen Bauraumbedarf in axialer und radialer Richtung charakterisiert, der bei Integration in Antriebsstränge mit zu berücksichtigen ist. Insbesondere beim Einsatz von Wandlern in Subsea- bzw. Unterwasseranwendungen ist dies von Nachteil, da die Verstellvorrichtung ebenfalls bei der Ausbildung eines diesen umschließenden Gehäuses mit berücksichtigt werden muss und daher ein Wandler mit einer Verstellvorrichtung vordefinierten Typs nicht ohne weiteres gegen einen anderen ausgetauscht werden kann. Ein weiterer Nachteil der vorbenannten Ausführung besteht in der damit verbundenen Kreuzung des Strömungskreislaufes durch die Verstellwelle und der daraus resultierenden Verlustleistung in einem Bereich des Strömungskreislaufes, der durch einen sehr hohen Energiegehalt charakterisiert ist.

Eine alternative Ausbildung besteht in der Anordnung der Verstellvorrichtung derart, dass die Verstellung der Stellschaufeln von innen her über eine durch eine Antriebswelle des Wandlers verlaufende Verstellwelle erfolgt, die über einen Winkeltrieb auf die Stellschaufeln einwirkt. Diese Ausführung ist durch einen hohen konstruktiven Aufwand charakterisiert.

Ein hydrodynamischer Wandler mit den im Oberbegriff von Anspruch 1 zusammengefassten Merkmalen wird in DE 25 05 092 A1 offenbart. Bei diesem hydrodynamischen Wandler wird ein durch Fliehkraft betätigter Verstellmechanismus zur Verstellung von Stellschaufeln eines Leitrades verwendet. Weitere hydrodynamische Wandler mit passiv betätigten Stellschaufeln werden in JP S57 69162 A und US 5 307 629 A offenbart.

Der Erfindung lag daher die Aufgabe zugrunde, einen hydrodynamischen Drehzahl-/Drehmomentwandler mit zumindest einer Stellschaufel an einem Leitrad derart weiterzuentwickeln, dass die vorgenannten Nachteile vermieden werden. Insbesondere ist ein Wandler mit Stellschaufeln am Leitrad und Verstellvorrichtung derart auszubilden, dass dieser in radialer und axialer Richtung möglichst wenig zusätzlichen Bauraum benötigt und die Verlustleistung durch den sich einstellenden Strömungskreislauf kreuzende Komponenten reduziert wird.

Die erfindungsgemäße Lösung ist durch die Merkmale des Anspruchs 1 charakterisiert. Vorteilhafte Ausgestaltungen sind in den Unteransprüchen beschrieben.

Unter dem stationären Kernraum wird der stationäre Raum verstanden, der von dem im Axialschnitt durch den Wandler (Ebene, die durch die Drehachse und eine Senkrechte zu dieser charakterisiert ist) torusförmigen Arbeitsraum umschlossen ist.

Der Begriff Drehachse beschreibt insbesondere die geometrische Achse, um welche eine Rotation erfolgt. Diese fällt dabei mit der Mittenachse bzw. Drehachse der Schaufelräder, insbesondere Pumpenrad und Turbinenrad beziehungsweise der mit diesen verbundenen An- und Abtriebswellen zusammen.

Die erfindungsgemäße Lösung bietet den Vorteil, dass aufgrund der Integration des Stellantriebes in den Kernraum der radiale Bauraumbedarf für den Wandler mit der Stelleinrichtung nicht über den ohnehin für den Wandler erforderlichen Bauraum in radialer Richtung hinausgeht. Bei Anwendungen im Subsea-Bereich kann die sich daraus ergebende Abdichtproblematik in den Wandler verlegt werden und wird damit vereinfacht. Ferner bietet die zentrale Anordnung in Abhängigkeit der Ausbildung des Wandlers den Vorteil, dass eine Kreuzung des Strömungskreislaufes in einem Bereich, in welchem diese durch einen hohen Energiegehalt charakterisiert ist, reduziert wird.

Der Stellantrieb kann dabei mit der wenigstens einen Stellschaufel oder dem verstellbaren Schaufelsegment direkt oder über eine Übertragungseinrichtung verbunden sein. Die erstgenannte Möglichkeit ist durch einen einfachen Aufbau und eine geringe Bauteilanzahl aufgrund hoher Funktionskonzentration charakterisiert. Die zweite Möglichkeit bietet den Vorteil, durch die Ausgestaltung der Übertragungseinrichtung eine Übersetzung zwischen der Verstellbewegung des Antriebes und der Verstellbewegung der Stellschaufel vorzusehen und/oder Abstände zwischen diesen zu überbrücken.

In einer vorteilhaften Ausbildung sind der Stellantrieb und die Übertragungseinrichtung in einer radialen Ebene angeordnet. Diese Lösung bietet den Vorteil geringsten axialen Bauraumbedarfs.

Der erfindungsgemäße Wandler zeichnet sich dadurch aus, dass die Verstellvorrichtung einen Stellantrieb mit Ringelementen aufweist, die jeweils koaxial zur Antriebswelle angeordnet sind. Ein erstes Ringelement ist dabei mit der wenigstens einen Stellschaufel zur Übertragung einer Stellkraft oder eines Stellmomentes wenigstens mittelbar, d.h. direkt oder über weitere Übertragungseinrichtungen verbunden, beispielsweise in Form einer Umlenkeinrichtung. Das erste Ringelement ist relativ zu einem zweiten Ringelement in Umfangsrichtung der Drehachse verdrehbar.

Wenigstens mittelbar bedeutet direkt oder indirekt unter Zwischenordnung weiterer Übertragungselemente.

Dies hat den Vorteil, dass nur wenig verschleißbehaftete, mechanische Bauteile erforderlich sind, um eine Stellkraft oder ein Stellmoment zu erzeugen. Dies wird allgemein dadurch erreicht, dass die Krafterzeugung, Einleitung und ggf. auch die Übertragung im Wesentlichen durch rotatorische Bewegungen von Elementen der Verstellvorrichtung erfolgt. Konkret kann dies dadurch erreicht werden, dass Ringelemente vorgesehen sind, die den Stellantrieb bilden und die in Umfangsrichtung der Drehachse relativ zueinander verdrehbar sind. Das erste Ringelement ist dann direkt oder über eine Übertragungseinrichtung, welche in Form einer Umlenkeinrichtung ausgebildet sein kann, mit der Stellschaufel oder dem verstellbaren Schaufelsegment gekoppelt. Das durch die Relativdrehung des ersten Ringelements bezogen auf das zweite Ringelement erzeugte Stellmoment bzw. die Stellkraft wird entweder direkt oder die Übertragungseinrichtung in die Stellschaufel eingeleitet und halten diese in der gewünschten Stellung.

Die Ringelemente sind jeweils koaxial zur Antriebswelle angeordnet, was zu einem kompakten Aufbau des Stellantriebs führt.

In einer vorteilhaften Ausführung ist das zweite Ringelement drehfest mit dem die Stellschaufel tragenden Leitrad verbunden oder wird in einer weiteren Weiterbildung von diesem gebildet. Durch eine Einstellung der Winkellage zwischen dem ersten und zweiten Ringelement wird die Position der Stellschaufel oder des verstellbaren Schaufelsegmentes beeinflusst.

Bei Vorsehen mehrerer ortsfest angeordneter Leiträder kann auch eine Anbindung an ein anderes der Leiträder erfolgen.

Der erfindungsgemäße Wandler zeichnet sich dadurch aus, dass das erste und zweite Ringelement wenigstens zwei in Umfangsrichtung der Drehachse angeordnete Druckkammern bilden die für die Relativdrehung zwischen dem ersten und zweiten Ringelement jeweils mit Druck beaufschlagbar sind. Die Betätigung des ersten Ringelements erfolgt dann vorzugsweise hydraulisch, da hier auf das gleiche Medium wie das Betriebsmedium zurückgegriffen werden kann. Auch werden mechanische Stellglieder, wie bspw. Rückstellfedern, vermieden. Die Rückstellung bzw. allgemein die Positionsänderung des ersten Ringelements erfolgt hydraulisch. Durch die beiden Druckkammern kann die Positionsänderung in beiden Umfangsrichtungen vorgenommen werden.

Durch Einstellung geeigneter Drücke in den Druckkammern kann eine Winkellage der beiden Ringelemente und somit ein gewünschter Anstellwinkel der Stellschaufel gehalten werden. Ein weiterer Vorteil dieser Ausführung ist die stufenlose und feinfühlige Verstellbarkeit der Stellschaufel.

In einer Weiterbildung der vorgenannten Ausführungsformen kann das erste Ringelement ein zylinderförmiges Gehäuse bilden, in dem das zweite Ringelement angeordnet ist. Damit wird eine besonders kompakte Ausgestaltung des Stellantriebs erreicht. Denkbar ist auch die umgekehrte Ausbildung, d.h. dass das zweite Ringelement ein zylinderförmiges Gehäuse bildet, in dem das erste Ringelement angeordnet ist.

Vorzugsweise weisen das erste und zweite Ringelement jeweils radial sich erstreckende, gegengleich angeordnete Flügel auf, die die Druckkammern in Umfangsrichtung begrenzen. Die gegengleich angeordneten Flügel greifen dabei ineinander ein und können in Umfangsrichtung so voneinander beabstandet werden, dass Druckkammern mit veränderbarem Volumen gebildet werden. Durch Beaufschlagung der Druckkammern mit unterschiedlichen Drücken, wird das erste Ringelement bezogen auf das zweite Ringelement im Uhrzeigersinn oder im Gegenuhrzeigersinn gedreht. Dadurch ist eine Verstellung der Stellschaufel in verschiedenen Richtungen möglich.

Die Flügel können zur Abdichtung der Druckkammern radial angeordnete Dichteinrichtungen und/oder axiale Dichteinrichtungen aufweisen. Die Dichteinrichtungen umfassen zumindest ein Dichtelement oder können auch als berührungslose Dichteinrichtungen ausgeführt sein.

Die Druckkammern weisen bei einer bevorzugten Ausführungsform in Umfangsrichtung der Drehachse angeordnete Anschläge zur Begrenzung der Relativdrehung zwischen dem ersten und zweiten Ringelement auf. Die Anschläge legen somit den Hub des ersten Ringelements in Umfangsrichtung fest. Die Anschläge können austauschbar ausgebildet sein, sodass zum einen bei Verschleiß die Anschläge ersetzt und zum anderen der Hub bzw. Stellweg des ersten Ringelements eingestellt werden kann.

Das erste Ringelement kann allgemein als ein rotierender Zylinder aufgefasst werden, dessen Hub in Umfangsrichtung wirkt.

Vorzugsweise sind in wenigstens einem Ringelement, insbesondere im zweiten Ringelement Bohrungen ausgebildet, die zur Druckbeaufschlagung in die Druckkammern, insbesondere im Bereich des Außendurchmessers münden. Die Ausbildung der Bohrungen im zweiten Ringelement hat den Vorteil, dass die Zufuhrkanäle im Leitrad gebildet sein können, die mit den im zweiten Ringelement ausgebildeten Bohrungen fluidverbunden sind. Die Mündung der Bohrungen im Bereich des Außendurchmessers des zweiten Ringelements hat den Vorteil, dass dadurch eine Spülung der Druckkammern erreicht wird. Etwaige am Außendurchmesser anhaftende Verunreinigungen, die sich im Betrieb dort ansammeln, werden durch die Einleitung des Arbeitsmediums im Bereich des Außendurchmessers gelöst bzw. vermieden.

Bei einer besonders bevorzugten Ausführungsform weist die Übertragungseinrichtung einen Verstellring auf, der koaxial zur Drehachse angeordnet und drehfest mit dem ersten Ringelement verbunden ist. Der Verstellring ist mit der wenigstens einen Stellschaufel zur Übertragung einer Stellkraft oder eines Stellmomentes gekoppelt. Der Verstellring trägt zur kompakten Bauweise des Wandlers bei, da dieser, wie die Ringelemente, koaxial zur Antriebwelle angeordnet ist. Durch die drehfeste Verbindung des Verstellringes mit dem ersten Ringelement werden etwaige mechanische Koppelbauteile vermieden. Vielmehr wird das für die Verstellung der Stellschaufel erforderliche Stellmoment direkt vom ersten Ringelement in den Verstellring eingeleitet. Die drehfeste Verbindung zwischen dem Verstellring und dem Ringelement kann beispielsweise durch eine stoffschlüssige Verbindung wie eine Schweißverbindung, oder durch form- oder kraftschlüssige Verbindungen erreicht werden.

Die Kopplung des Verstellrings mit der Stellschaufel kann in einer Variante dadurch erfolgen, dass der Verstellring wenigsten einen Nocken aufweist, der mit einem Kurbeltrieb zusammen wirkt. Der Kurbeltrieb ist mit der Stellschaufel gekoppelt. Die Ansteuerung der Stellschaufel durch einen Kurbeltrieb ist an sich bekannt, sodass diesbezüglich auf bereits vorhandene Konstruktionen zurückgegriffen werden kann. Die Ausbildung des Nockens am Verstellring hat gegenüber dem Stand der Technik den Vorteil, dass für die Krafteinleitung in den Kurbeltrieb keine gesonderten mechanischen Bauteile erforderlich sind. Vielmehr wird der Kurbeltrieb direkt durch den Nocken betätigt. Die Rückstellkraft wird durch das an der Stellschaufel anliegende Moment im Arbeitsraum erzeugt. Vorzugsweise bildet der Kurbeltrieb ein radial angeordnetes Hebelelement, das die Drehbewegung des Verstellrings in eine translatorische Bewegung umwandelt. Durch die Kopplung des Hebelelements mit der Stellschaufel wird in an sich bekannte Weise die Stellbewegung erreicht.

Bei einer alternativen Variante weist der Verstellring eine Außenverzahnung auf, die mit der Außenverzahnung eines Zapfens der Stellschaufel kämmt. Der Zapfen erstreckt sich parallel zur Mittelachse des Verstellringes. Diese Ausführung hat den Vorteil, dass die rotatorische Bewegung des Verstellringes direkt in eine Drehbewegung der Stellschaufel umgewandelt wird. Damit wird die Anzahl der mechanischen Bauteile weiter reduziert.

Die Stellschaufel kann eine Stellschaufel oder eine mehrgliedrige Schaufel mit wenigstens einem Verdrehsegment umfassen. Stellschaufeln und mehrgliedrige Schaufeln sind an sich bekannt, wobei eine Stellschaufel eine einteilige Stellschaufel bedeutet, die als Ganzes verstellbar ist. Bei einer mehrgliedrigen Schaufel steht ein Schaufelsegment fest. Wenigstens ein weiteres Schaufelsegment ist verdrehbar. Der Antrieb für das verdrehbare Schaufelsegment wird durch die Verstellvorrichtung bewirkt.

Bei den Stellschaufeln oder verstellbaren Schaufelsegmenten handelt es sich um drehbar gelagerte Schaufeln beziehungsweise Schaufelteile, deren Winkellage gegenüber einer durch die Erstreckung in radialer Richtung beschreibbaren Ausgangslage durch Verdrehen um eine vordefinierte Drehachse veränderbar ist. Die Ausgangslage beschreibt eine erste Funktionsstellung, jede weitere aus dieser ausgelenkte Lage eine weitere Funktionsstellung.

Die Erfindung ist in besonders vorteilhafter Ausbildung für einen Wandler in Form eines Hochtriebswandlers mit den folgenden Merkmalen geeignet:
ein Pumpenrad, das im Betrieb von innen nach außen durchströmt ist;
ein Turbinenrad, das im Betrieb von außen nach innen durchströmt ist;
erste Leitschaufeln zwischen Pumpenrad und Turbinenrad;
zweite Leitschaufeln zwischen Turbinenrad und Pumpenrad, wobei erste und zweite Leitschaufeln an unterschiedlichen Leiträdern und auf unterschiedlichen Durchmessern angeordnet sind und die zweiten Leitschaufeln wenigstens die zumindest eine Verstellschaufel oder ein verstellbares Schaufelsegment umfassen.

In einer weiteren Ausbildung dieser vorgenannten Wandlerausführung liegen die Austrittskanten des Pumpenrades auf einem Radius R, der zwischen dem 1,2 bis 8-fachen des Radius r beträgt, auf welchem sich die Eintrittskanten des Turbinenrades befinden, womit ein Hochtriebswandler realisiert wird. In einer vorteilhaften Weiterbildung liegen die Eintrittskanten der Schaufeln des Pumpenrades auf einem größeren Radius als die Eintrittskanten der Schaufeln des Turbinenrades.

Die Erfindung wird nachfolgend mit weiteren Einzelheiten unter Bezug auf die beigefügten Zeichnungen näher beschrieben. Darin zeigen:
- Fig. 1a und 1b:: in schematisiert vereinfachter Darstellung einen Längsschnitt eines Wandlers mit erfindungsgemäßer Anordnung des Stellantriebes und der Übertragungseinrichtung;
- Fig. 2:: den Grundaufbau und die Funktionsweise eines Stellantriebes;
- Fig. 3a:: beispielhaft einen Querschnitt durch den Stellantrieb des Wandlers gemäß Figur 2; und
- Fig. 3b:: einen Ausschnitt des Stellantriebs gemäß Figur 3a.

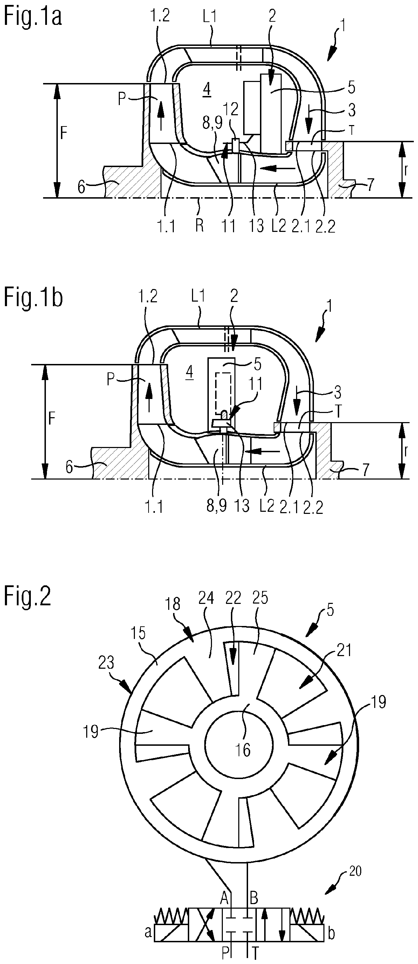

Figuren 1a und 1b zeigen jeweils in einem Längsschnitt durch eine schematisiert stark vereinfachte Darstellung eines hydrodynamischen Drehzahl-/Drehmomentwandlers, nachfolgend kurz Wandler 1 genannt, erfindungsgemäße Anordnungen und Ausbildungen einer Verstellvorrichtung 2. Derartige Wandler 1 werden zum Zweck der Drehzahl- und/oder Drehmomentenwandlung in Antriebssträngen eingesetzt. Diese umfassen mindestens jeweils eines der nachfolgend genannten Schaufelräder: ein Pumpenrad P, ein Turbinenrad T und ein Leitrad L. Dabei sind das Pumpenrad und das Turbinenrad T um eine geometrische Drehachse R rotierbar. Das Leitrad L ist in der Regel ortsfest oder stützt sich über einen Freilauf an einem Bauteil, vorzugsweise ortsfesten Bauteil ab. Die Schaufelräder bilden einen mit Betriebsmittel durchströmbaren Arbeitsraum 10 zur Ausbildung einer hydrodynamischen Kreislaufströmung 3, wobei das Leitrad L wenigstens eine durch eine Verstellvorrichtung 2 verstellbare Stellschaufel 8 oder zumindest ein verstellbares Schaufelsegment 9 an einer Schaufel der Beschaufelung aufweist. Die Verstellvorrichtung 2 umfasst einen im Kernraum 4 der Kreislaufströmung 3 angeordneten und mit der wenigstens einen Stellschaufel 8 oder dem verstellbaren Schaufelsegment 9 zur Übertragung einer Stellkraft gekoppelten Stellantrieb 5. Der Kernraum 4 ist dabei der Raum, welcher von der sich im Betrieb einstellenden Kreislaufströmung 3 umschlossen wird. Bauteilmäßig liegt der Kernraum 4 im von den inneren Begrenzungsflächen der Schaufelräder P, L, T umschlossenen Bauraum.

Das Pumpenrad P ist entweder drehfest bzw. mitnahmefest mit einer Antriebswelle 6 gekoppelt oder bildet diese in integraler Ausführung. Das Turbinenrad T ist entweder drehfest bzw. mitnahmefest mit einer Abtriebswelle 7 gekoppelt oder bildet diese bei integraler Ausführung. Das Leitrad L, hier die beiden Leiträder L1 und L2 stützen sich vorzugsweise an einem hier nicht dargestellten Gehäuse ab.

Der Stellantrieb 5 ist mit der wenigstens einen Stellschaufel 8 oder dem verstellbaren Schaufelsegment 9 direkt oder wie in den Figuren 1a und 1b schematisiert verdeutlicht über eine Übertragungseinrichtung 11 verbunden. Die Übertragungseinrichtung 11 kann verschiedenartig ausgebildet sein und eine Übersetzung zwischen den Verstellbewegungen von Stellantrieb 5 und Stellschaufel 8 realisieren sowie die Stellkraft mit unterschiedlicher Richtung an der Stellschaufel 8 einleiten.

Figur 1a zeigt beispielhaft eine Ausbildung, bei welcher die mit dem Stellantrieb 5 gekoppelte Übertragungseinrichtung 11 und der Stellantrieb 5 nicht in einer radialen Ebene angeordnet sind. Die Übertragungseinrichtung 11 ermöglicht eine Richtungsänderung der Stellkraft bei Einleitung in die Stellschaufel 8 und kann Versatz in axialer als auch radialer Richtung zwischen Stellschaufel 8 und Stellantrieb 5 überbrücken. Die Übertragungseinrichtung 11 umfasst hier beispielsweise einen mit dem Stellantrieb 5 gekoppelten Zapfen, welcher an einem an der Stellschaufel 8 befestigten Hebel 13 wirksam wird. Der Hebel 13 ist mit der Stellschaufel 8 verbunden und bewirkt eine Verdrehung um eine Dreh- oder Schwenkachse 12, welche von einem Zapfen zur Lagerung der Stellschaufel 8 gebildet werden.

Demgegenüber zeigt Figur 1b eine Ausführung, bei welcher Stellantrieb 5 und Übertragungseinrichtung 11 in einer radialen Ebene angeordnet sind.

Nicht explizit dargestellt ist eine Ausführung mit direkter Kopplung zwischen Stellantrieb 5 und Stellschaufel 8. In diesem Fall wird die Funktion der Übertragungseinrichtung 11 mit vom Stellantrieb 5 übernommen bzw. die Übertragungseinrichtung 11 ist integraler Bestandteil des Stellantriebes 5. Die Kopplung kann beispielsweise über den Eingriff zweier Verzahnungen realisiert werden, wobei eine erste Verzahnung am Stellantrieb 5 vorgesehen ist, welche sich beispielsweise am Ausgangselement des Stellantriebes 5 über einen Teilbereich von dessen Erstreckung in Umfangsrichtung um die Drehachse erstreckt. Die zweite Verzahnung ist dann beispielsweise an einem an der Stellschaufel 8 zur drehbaren Lagerung dessen vorgesehenen Drehzapfen angeordnet. Andere Ausbildungen sind denkbar.

Der Stellantrieb 5 ist in einer besonders vorteilhaften Ausbildung im einfachsten Fall als Ringkolbensteller ausgeführt. Derartige Stellantriebe sind beispielhaft in den Figuren 2 bis 3b wiedergegeben.

Der Stellantrieb 5 weist beispielsweise Ringelemente 18, 19 auf, die jeweils koaxial zur Drehachse angeordnet sind, d.h. die beiden Ringelemente 18, 19 sind auch konzentrisch angeordnet (siehe auch Figuren 2 bis 3b).

Das erste Ringelement 18 ist bezogen auf das zweite Ringelement 19 in Umfangsrichtung der Drehachse verdrehbar. Durch die Drehbewegungen des ersten Ringelements 18 wird die Übertragungseinrichtung 11 betätigt, die die Drehbewegung des Ringelements 18 auf die Stellschaufel 8 überträgt und den Anstellwinkel der Stellschaufel 8 ändert. Denkbar, jedoch hier nicht dargestellt, ist auch die Möglichkeit die Funktionszuordnung der beiden dargestellten Ringelemente 18 und 19 zu tauschen. D.h. das hier dargestellte äußere Ringelement 18 würde als feststehendes und damit zweites Ringelement fungieren, während das innere Ringelement 19 dann die Funktion des gegenüber diesem in Umfangsrichtung relativ verdrehbaren Ringelementes übernehmen würde.

Konkret ist bei dem Ausführungsbeispiel gemäß Figur 2 bei Einsatz in Figur 1 das zweite Ringelement 19 innen angeordnet und drehfest mit einem der Leiträder L1 oder L2 verbunden. Das drehbar gelagerte erste Ringelement 18 bildet ein zylinderförmiges Gehäuse 23, das das zweite Ringelement 19 umschließt. Mit anderen Worten ist das zweite Ringelement 19 im ersten Ringelement 18 angeordnet. Dazu weist das erste Ringelement 18 eine in axialer Richtung außen angeordnete und hier nicht dargestellte erste Stirnwand sowie eine in axialer Richtung innen angeordnete zweite Stirnwand auf, die das Gehäuse 23 in axialer Richtung begrenzen. Das Gehäuse 23 weist dann ferner einen Außenring 15 auf, der das Gehäuse 23 in radialer Richtung begrenzt und der zwischen den beiden hier nicht dargestellten Stirnwänden angeordnet ist. Das Gegenstück zum Außenring 15 bildet der Innenring 16 des zweiten Ringelements 19, der direkt mit dem Leitrad L2 verbunden ist. Im Zusammenspiel mit den axialen Stirnwänden ist zwischen dem ersten und zweiten Ringelement 18, 19 ein Ringraum gebildet.

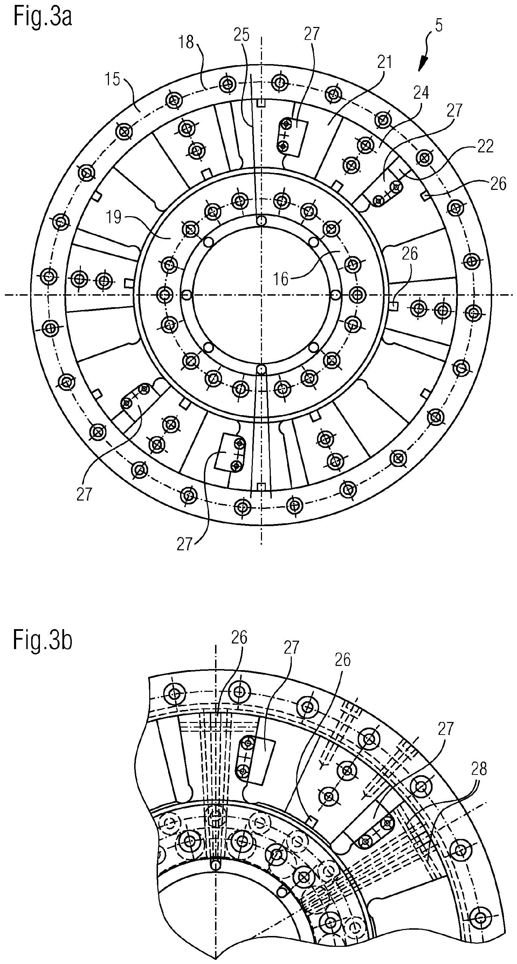

In Figuren 2 und 3a, 3b ist ein Querschnitt der beiden montierten Ringelemente 18, 19 dargestellt, aus dem der Ringraum sowie die darin angeordneten Einbauten ersichtlich ist. Die beiden Ringelemente 18, 19 weisen jeweils radial angeordnete Flügel 24, 25 auf, die durch die Relativdrehung zwischen dem ersten und zweiten Ringelement 18, 19 als Drehflügel fungieren. Konkret weist das erste Ringelement 18 erste Flügel 24 auf, die am Außenring 15 befestigt sind und sich radial nach innen erstrecken. Das zweite Ringelement 19 weist zweite Flügel 25 auf, die am Innenring 16 ausgebildet sind und sich radial nach außen erstrecken. Die Flügel 24, 25 der beiden Ringelemente 18, 19 sind somit gegengleich angeordnet.

Zwischen den Flügeln 24, 25 der beiden Ringelemente 18, 19 sind Druckkammern 21, 22 ausgebildet, deren Volumen durch die Stellung der jeweiligen Flügel 24, 25 veränderbar ist. Mit anderen Worten ist der Abstand der Flügel 24, 25 in Umfangsrichtung durch eine Verdrehung des ersten Ringelements 18 veränderbar.

Jeweils ein Flügel 24 des ersten Ringelements 18 und ein weiterer Flügel 25 des zweiten Ringelements 19 begrenzen zusammen eine erste Druckkammer 21. Dazu liegt der erste Flügel 24 des ersten Ringelements 18 am Innenring 16 des zweiten Ringelements 19 dichtend an. Dasselbe gilt für den zweiten Flügel 25 des zweiten Ringelements 19 in entsprechender Weise, der am Innenumfang des Außenrings 15 des ersten Ringelements 18 dichtend anliegt. Die beiden Flügel 24, 25 erstrecken sich überdies in axialer Richtung zwischen den hier nicht dargestellten axialen Stirnwänden, an denen die Flügel 24, 25 ebenfalls dichtend anliegen, sodass insgesamt eine geschlossene Druckkammer 21 gebildet ist, die in Umfangsrichtung von den Flügeln 24, 25 und in radialer Richtung vom Außenring 15 und vom Innenring 16 begrenzt ist.

In Umfangsrichtung der beiden Ringelemente 18, 19 ist eine weitere Druckkammer 22 ausgebildet, die in entsprechender Weise von den Flügeln 24, 25 der beiden Ringelemente 18, 19 begrenzt ist.

Mit anderen Worten ist ein erster Flügel 24 des ersten Ringelements 18 zwischen zwei zweiten Flügeln 25 des zweiten Ringelements 19 angeordnet, so dass auf beiden Seiten des ersten Flügels 24 jeweils ein Druckraum 21, 22 ausgebildet ist.
Wie in den Figuren 2 und 3a, 3b zu erkennen, sind auf dem Umfang der beiden Ringelemente 18, 19 mehrere Druckkammern 21, 22 in entsprechender Weise ausgebildet, wobei jeweils ein erster Flügel 24 des ersten Ringelements 18 und ein zweiter Flügel 25 des zweiten Ringelements 19 alternierend angeordnet sind. Dadurch werden auf dem Umfang verteilt angeordnete Druckkammern 21, 22 gebildet, die sich auf beiden Seiten der ersten Flügel 24 des ersten Ringelements 18 erstrecken.

Die Druckkammern 21, 22 sind zur Erzeugung der relativen Drehung zwischen den beiden Ringelementen 18, 19 jeweils mit den Druck beaufschlagbar. Bei dem Ausführungsbeispiel gemäß der Figuren 2 bis 3b wird der Druck hydraulisch, beispielsweise eine hydraulische Steuereinheit 20 erzeugt. Bei dem in Figur 3a dargestellten Betriebszustand herrscht in der ersten Druckkammer 21 ein höherer Druck als in der zweiten Druckkammer 22, so dass der erste Flügel 24 und damit das Ringelement 18 im Uhrzeigersinn verdreht ist. Durch eine Änderung der Druckverhältnisse in den beiden Druckkammern 21, 22 ist eine Verstellung des ersten Ringelements 18 im Gegenuhrzeigersinn möglich.

Das erste Ringelement 18 fungiert damit als Ringkolben.

Zur Begrenzung der Hubbewegung des ersten Ringelements 18 in Umfangsrichtung sind Anschläge 27 vorgesehen, gegen die der erste Flügel 24 des ersten Ringelements 18 anschlägt (siehe Figur 2). Die Anschläge 27 können beispielsweise als austauschbare Einstellsteine ausgebildet sein, die mit den zweiten Flügeln 25 des zweiten Ringelements 19 verschraubt oder anderweitig befestigt sind.
Die Anschläge 27 sind wie in Figur 2 dargestellt, sowohl auf beiden Seiten eines ersten Flügels 24 des ersten Ringelements 18 angeordnet, um die Verstellbewegung in beiden Umfangsrichtungen zu begrenzen. Außerdem sind weitere Anschläge 27 punktsymmetrisch auf der gegenüberliegenden Seite des ersten Ringelements 18 angeordnet.

In der Detaildarstellung gemäß Figur 3b sind weitere Einzelheiten des Stellantriebs 17 zu erkennen. So ist beispielsweise Figur 3 zu entnehmen, dass im zweiten Ringelement 19 Bohrungen 28 ausgebildet sind, die als Druckkanäle zur Zufuhr der Hydraulikflüssigkeit dienen. Konkret sind die Druckkanäle im Innenring 16 ausgebildet und erstrecken sich durch die zweiten Flügel 25 radial nach außen. Die Bohrungen 28 münden in die jeweiligen Druckkammern 21, 22 im Bereich des Außendurchmessers der Druckkammern 21, 22. Mit anderen Worten ist der Abstand in den Mündungsöffnungen der Bohrungen 28 zum Außenring 15 sehr viel kleiner als der Abstand zum Innenring 16. Dadurch wird eine Spülwirkung erreicht, mit der weitgehend eine Anlagerung von Verunreinigungen am Außenring 15 verhindert wird.

Die Zufuhrkanäle, die die Bohrungen 28 des zweiten Ringelements 19 mit einer Zufuhreinrichtung (nicht dargestellt) verbinden, sind direkt in der Antriebswelle 6 oder in einem der Antriebswelle 6 zugeordneten Bauteil ausgebildet. Konkret kann zwischen dem Innenring 16 des zweiten Ringelements 19 und dem Leitrad L2 eine angeordnet, in der die Zufuhrkanäle für die Versorgung der Druckkammern 21, 22 mit Hydraulikflüssigkeit ausgebildet sind. Die Verbindung zwischen dem Innenring 16 und der Hülse kann beispielsweise kraftschlüssig erfolgen.

Die Übertragung der Drehbewegung des ersten Ringelements 18 auf die Stellschaufel 8 kann direkt oder über eine Übertragungseinrichtung 11 erfolgen.

Die konkrete konstruktive Ausbildung kann verschiedenartig ausgeführt werden.

Zusammengefasst funktioniert der Wandler 1 wie folgt:
Zur Verstellung der Beschaufelung des Leitrades L wird der Stellantrieb 5 betätigt. Dazu werden die Druckkammern 21, 22 mit unterschiedlichen Drücken beaufschlagt, so dass das erste Ringelement 18 bezogen auf das zweite Ringelement 19 in Umfangsrichtung verdreht wird. Durch die Drehbewegung wird die Übertragungseinrichtung 11 betätigt und wandelt die rotatorische Bewegung des ersten Ringelementes 18 in eine überlagerte translatorische / rotatorische Bewegung um, die eine Kippbewegung der Stellschaufel 8 bewirkt, so dass der gewünschte Anstellwinkel der Stellschaufel 8 eingestellt werden kann. Die Position der Stellschaufel 8 wird durch die Druckverhältnisse im Stellantrieb 5 gehalten

Bei dem in den Figuren 1a und 1b dargestellten Wandlern handelt es sich um einen Hochtriebswandler. Dieser umfasst ein Pumpenrad P, das im Betrieb von innen nach außen durchströmt ist; ein Turbinenrad T, das im Betrieb von außen nach innen durchströmt ist und erste Leitschaufeln zwischen Pumpenrad P und Turbinenrad T am Leitrad L1 sowie zweite Leitschaufeln zwischen Turbinenrad T und Pumpenrad P, wobei erste und zweite Leitschaufeln an unterschiedlichen Leiträdern L1, L2 und auf unterschiedlichen Durchmessern angeordnet sind und die zweiten Leitschaufeln wenigstens die zumindest eine Verstellschaufel 8 oder ein verstellbares Schaufelsegment 9 umfassen. Dabei liegen die Austrittskanten des Pumpenrades P auf einem Radius, der zwischen dem 1,2 bis 8-fachen des Radius r beträgt, auf welchem sich die Eintrittskanten des Turbinenrades T in Strömungsrichtung befinden. Vorteilhaft ist es, wenn dazu noch die Eintrittskanten der Schaufeln des Pumpenrades P auf einem größeren Radius als die Eintrittskanten der Schaufeln des Turbinenrades T liegen.

### Bezugszeichenliste

- 1: Wandler
- 2: Verstellvorrichtung
- 3: Kreislaufströmung
- 4: Kernraum
- 5: Stellantrieb
- 6: Antriebswelle
- 7: Abtriebswelle
- 8: Stellschaufel
- 9: Schaufelsegment
- 10: Arbeitsraum
- 11: Übertragungseinrichtung
- 12: Schwenkachse
- 13: Hebel
- 15: Außenring
- 16: Innenring
- 18: erstes Ringelement
- 19: zweites Ringelement
- 20: hydraulische Steuereinheit
- 21: Druckkammer
- 22: Druckkammer
- 23: zylinderförmiges Gehäuse
- 24: Flügel
- 25: Flügel
- 26: Dichtelemente
- 27: Anschläge
- 28: Bohrungen

- P: Pumpenrad
- T: Turbinenrad
- L1, L2: Leitrad

## Patentansprüche

1. Hydrodynamischer Wandler (1) mit zumindest jeweils einem um eine Drehachse rotierbaren Pumpenrad (P), einem um eine Drehachse rotierbaren Turbinenrad (T) und einem Leitrad (L1, L2), die einen mit Betriebsmittel durchströmbaren Arbeitsraum (10) zur Ausbildung einer hydrodynamischen Kreislaufströmung bilden, wobei der Arbeitsraum (10) torusförmig ist und in einem Axialschnitt durch den hydrodynamischen Wandler (1) einen stationären Kernraum (4) umschließt,
wobei das Leitrad (L1, L2) wenigstens eine Stellschaufel (8) oder Schaufelsegment (9) aufweist, die durch eine Verstellvorrichtung (2) verstellbar ist;
wobei die Verstellvorrichtung (2) einen im stationären Kernraum (4) angeordneten und mit der wenigstens einen Stellschaufel (8) oder dem verstellbaren Schaufelsegment (9) zur Übertragung einer Stellkraft gekoppelten Stellantrieb (5) umfasst, und
der Stellantrieb (5) Ringelemente (18, 19) aufweist, die jeweils koaxial zur Drehachse angeordnet sind, wobei ein erstes Ringelement (18) mit der wenigstens einen Stellschaufel (8) oder dem verstellbaren Schaufelsegment (9) zur Übertragung einer Stellkraft oder eines Stellmomentes wenigstens mittelbar verbunden ist und das erste Ringelement (18) relativ zu einem zweiten Ringelement (19) in Umfangsrichtung der Drehachse verdrehbar ist;
**dadurch gekennzeichnet,**
**dass** das erste und zweite Ringelement (18, 19) wenigstens zwei in Umfangsrichtung der Drehachse angeordnete Druckkammern (21, 22) bilden, die für die Relativdrehung zwischen dem ersten und zweiten Ringelement (18, 19) jeweils mit Druck beaufschlagbar sind.

2. Hydrodynamischer Wandler (1) nach Anspruch 1,
**dadurch gekennzeichnet,**
**dass** der Stellantrieb (5) mit der wenigstens einen Stellschaufel (8) oder dem verstellbaren Schaufelsegment (9) direkt oder über eine Übertragungseinrichtung (11) verbunden ist.

3. Hydrodynamischer Wandler (1) nach Anspruch 2,
**dadurch gekennzeichnet,**
**dass** der Stellantrieb (5) und die Übertragungseinrichtung (11) in einer radialen Ebene angeordnet sind.

4. Hydrodynamischer Wandler (1) nach einem der Ansprüche 1 bis 3,
**dadurch gekennzeichnet,**
**dass** das zweite Ringelement (19) drehfest mit dem Leitrad (L1, L2) verbunden ist.

5. Hydrodynamischer Wandler (1) nach einem der Ansprüche 1 bis 4,
**dadurch gekennzeichnet,**
**dass** eines der beiden Ringelemente (18, 19) - das erste oder das zweite Ringelement (18, 19) - ein zylinderförmiges Gehäuse (23) bildet, in dem das andere der Ringelemente (18, 19) - zweites oder erstes Ringelement (19, 18) - unter Ausbildung eines Ringkolbens angeordnet ist, wobei das erste und zweite Ringelement (18, 19) jeweils radial sich erstreckende, gegengleich angeordnete Flügel (24, 25) aufweisen, die die Druckkammern (21, 22) in Umfangsrichtung begrenzen.

6. Hydrodynamischer Wandler (1) nach einem der Ansprüche 1 bis 5,
**dadurch gekennzeichnet,**
**dass** Bohrungen (28) in wenigstens einem Ringelement (18, 19), insbesondere im zweiten Ringelement (19), ausgebildet sind, die zur Druckbeaufschlagung in die Druckkammern (21, 22), insbesondere im Bereich des Außendurchmessers, münden.

7. Hydrodynamischer Wandler (1) nach einem der Ansprüche 2 bis 6,
**dadurch gekennzeichnet,**
**dass** ein Verstellring vorgesehen ist, der vom ersten Ringelement (18) gebildet ist oder als Bestandteil der Übertragungseinrichtung (11) drehfest mit dem ersten Ringelement (18) verbunden ist, wobei der Verstellring koaxial zur Drehachse angeordnet und mit der wenigstens einen Stellschaufel (8) zur Übertragung einer Stellkraft oder eines Stellmomentes gekoppelt ist.

8. Hydrodynamischer Wandler (1) nach Anspruch 7,
**dadurch gekennzeichnet,**
**dass** der Verstellring wenigstens einen Nocken aufweist, der mit einem Kurbeltrieb, insbesondere einem radial angeordneten Hebelelement, zusammenwirkt, wobei der Kurbeltrieb mit der Stellschaufel (8) gekoppelt ist.

9. Hydrodynamischer Wandler (1) nach Anspruch 7,
**dadurch gekennzeichnet,**
**dass** das erste Ringelement (18) oder der mit diesem verbundene Verstellring eine Außenverzahnung aufweist, die mit der Außenverzahnung eines Zapfens der Stellschaufel (8) kämmt.

10. Hydrodynamischer Wandler (1) nach einem der Ansprüche 1 bis 9,
**dadurch gekennzeichnet,**
**dass** die Stellschaufel (8) eine Stellschaufel (8) oder eine mehrgliedrige Schaufel mit wenigstens einem Verdrehsegment umfasst.

11. Hydrodynamischer Wandler (1) nach einem der Ansprüche 1 bis 10,
**dadurch gekennzeichnet,**
**dass** der hydrodynamische Wandler (1) als ein Wandler (1) ausgewählt aus der Gruppe von Wandlern (1) ausgebildet ist:
- einstufiger Wandler (1)
- mehrstufiger Wandler (1)
- einphasiger Wandler (1)
- mehrphasiger Wandler (1)

12. Hydrodynamischer Wandler (1) nach einem der Ansprüche 1 bis 11,
**dadurch gekennzeichnet,**
**dass** dieser aufweist:
ein Pumpenrad (P), das im Betrieb von innen nach außen durchströmt ist;
ein Turbinenrad (T), das im Betrieb von außen nach innen durchströmt ist;
erste Leitschaufeln im Strömungskreislauf betrachtet zwischen Pumpenrad (P) und Turbinenrad (T);
zweite Leitschaufeln zwischen Turbinenrad (T) und Pumpenrad (P), wobei erste und zweite Leitschaufeln an unterschiedlichen Leiträdern (L1, L2) und auf unterschiedlichen Durchmessern angeordnet sind und die zweiten Leitschaufeln wenigstens eine Stellschaufel (8) oder verstellbares Schaufelsegment (9) umfassen.

## Claims

1. Hydrodynamic converter (1) having at least in each case one pump wheel (P) rotatable about an axis of rotation, a turbine wheel (T) rotatable about an axis of rotation, and a stator (L1, L2), which form a working chamber (10) which can be flowed through by operating medium and which serve for forming a hydrodynamic circulating flow, wherein
the working chamber (10) is toroidal and, in an axial section through the hydrodynamic converter (1), surrounds a static core chamber (4),
wherein the stator (L1, L2) has at least one adjustable vane (8) or vane segment (9) which is adjustable by means of an adjustment device (2); wherein the adjustment device (2) comprises an adjusting drive (5) which is arranged in the static core chamber (4) and which is coupled to the at least one adjustable vane (8) or to the adjustable vane segment (9) for the purposes of transmitting an adjusting force, and
the adjusting drive (5) has ring elements (18, 19) which are arranged in each case coaxially with respect to the axis of rotation, wherein a first ring element (18) is connected at least indirectly to the at least one adjustable vane (8) or to the adjustable vane segment (9) for the purposes of transmitting an adjusting force or an adjusting moment, and the first ring element (18) is rotatable relative to a second ring element (19) in a circumferential direction of the axis of rotation; **characterized**
**in that** the first and second ring element (18, 19) form at least two pressure chambers (21, 22) which are arranged in a circumferential direction of the axis of rotation and which can each be charged with pressure for the relative rotation between the first and second ring element (18, 19).

2. Hydrodynamic converter (1) according to Claim 1, **characterized**
**in that** the adjusting drive (5) is connected to the at least one adjustable vane (8) or to the adjustable vane segment (9) directly or via a transmission device (11).

3. Hydrodynamic converter (1) according to Claim 2, **characterized**
**in that** the adjusting drive (5) and the transmission device (11) are arranged in a radial plane.

4. Hydrodynamic converter (1) according to any of Claims 1 to 3,
**characterized**
**in that** the second ring element (19) is connected rotationally fixedly to the stator (L1, L2).

5. Hydrodynamic converter (1) according to any of Claims 1 to 4,
**characterized**
**in that** one of the two ring elements (18, 19) - the first or the second ring element (18, 19) - forms a cylindrical housing (23) in which the other of the ring elements (18, 19), - second or first ring element (19, 18) - is arranged so as to form a ringshaped piston, wherein the first and second ring element (18, 19) each have radially extending vanes (24, 25) which are arranged equally and oppositely to one another and which delimit the pressure chambers (21, 22) in a circumferential direction.

6. Hydrodynamic converter (1) according to any of Claims 1 to 5,
**characterized**
**in that** bores (28) are formed in at least one ring element (18, 19), in particular in the second ring element (19), which bores open, for the purposes of pressurization, into the pressure chambers (21, 22), in particular in the region of the outer diameter.

7. Hydrodynamic converter (1) according to any of Claims 2 to 6,
**characterized**
**in that** an adjustment ring is provided which is formed by the first ring element (18) or which, as a constituent part of the transmission device (11), is connected rotationally conjointly to the first ring element (18), wherein the adjustment ring is arranged coaxially with respect to the axis of rotation and is coupled to the at least one adjustable vane (8) for the transmission of an adjusting force or of an adjusting moment.

8. Hydrodynamic converter (1) according to Claim 7, **characterized**
**in that** the adjustment ring has at least one cam which interacts with a crank drive, in particular a radially arranged lever element, wherein the crank drive is coupled to the adjustable vane (8).

9. Hydrodynamic converter (1) according to Claim 7, **characterized**
**in that** the first ring element (18) or the adjustment ring connected thereto has an external toothing which meshes with the external toothing of a journal of the adjustable vane (8).

10. Hydrodynamic converter (1) according to any of Claims 1 to 9,
**characterized**
**in that** the adjustable vane (8) comprises one adjustable vane (8) or a multi-element vane with at least one rotary segment.

11. Hydrodynamic converter (1) according to any of Claims 1 to 10,
**characterized**
**in that** the hydrodynamic converter (1) is formed as a converter (1) selected from the following group of converters (1):
- single-stage converter (1)
- multi-stage converter (1)
- single-phase converter (1)
- multi-phase converter (1)

12. Hydrodynamic converter (1) according to any of Claims 1 to 11,
**characterized**
**in that** said hydrodynamic converter has:
a pump wheel (P) which is flowed through from the inside to the outside during operation;
a turbine wheel (T) which is flowed through from the outside to the inside during operation;
first guide vanes between pump wheel (P) and turbine wheel (T) as viewed in the flow circuit;
second guide vanes between turbine wheel (T) and pump wheel (P), wherein first and second guide vanes are arranged on different stators (L1, L2) and at different diameters, and the second guide vanes comprise at least one adjustable vane (8) or adjustable vane segment (9).

## Revendications

1. Convertisseur hydrodynamique (1), comprenant au moins respectivement une roue de pompe (P) pouvant tourner sur un axe de rotation, une roue de turbine (T) pouvant tourner sur un axe de rotation et un stator (L1, L2) qui constituent un espace de travail (10) pouvant être traversé par un fluide de travail pour réaliser un écoulement de circulation hydrodynamique,
dans lequel l'espace de travail (10) est toroïdal et entoure dans une section axiale à travers le convertisseur hydrodynamique (1) un espace central stationnaire (4),
dans lequel le stator (L1, L2) présente au moins une aube de réglage (8) ou un segment d'aube (9) qui est ajustable par un dispositif d'ajustage (2) ;
dans lequel le dispositif d'ajustage (2) comprend un actionneur (5) disposé dans l'espace central stationnaire (4) et couplé à ladite au moins une aube de réglage (8) ou au segment d'aube réglable (9) pour transmettre une force de réglage, et
l'actionneur (5) présente des éléments annulaires (18, 19) qui sont respectivement disposés de manière coaxiale à l'axe de rotation, un premier élément annulaire (18) étant relié au moins indirectement à ladite au moins une aube de réglage (8) ou au segment d'aube réglable (9) pour transmettre une force de réglage ou un couple de réglage, et le premier élément annulaire (18) pouvant être amené à tourner par rapport à un deuxième élément annulaire (19) dans la direction circonférentielle de l'axe de rotation ;
**caractérisé en ce que** les premier et deuxième éléments annulaires (18, 19) forment au moins deux chambres de pression (21, 22) disposées dans la direction circonférentielle de l'axe de rotation, qui peuvent être mises en pression respectivement pour la rotation relative entre le premier et le deuxième élément annulaire (18, 19).

2. Convertisseur hydrodynamique (1) selon la revendication 1, **caractérisé en ce que** l'actionneur (5) est relié directement ou par un dispositif de transmission (11) à ladite au moins une aube de réglage (8) ou au segment d'aube réglable (9).

3. Convertisseur hydrodynamique (1) selon la revendication 2, **caractérisé en ce que** l'actionneur (5) et le dispositif de transmission (11) sont disposés dans un plan radial.

4. Convertisseur hydrodynamique (1) selon l'une quelconque des revendications 1 à 3, **caractérisé en ce que** le deuxième élément annulaire (19) est relié au stator (L1, L2) de manière solidaire en rotation.

5. Convertisseur hydrodynamique (1) selon l'une quelconque des revendications 1 à 4, **caractérisé en ce que** l'un des deux éléments annulaires (18, 19) - le premier ou le deuxième élément annulaire (18, 19) - forme un carter cylindrique (23) dans lequel est disposé l'autre des éléments annulaires (18, 19) - le deuxième ou le premier élément annulaire (19, 18) - en réalisant un piston annulaire, dans lequel les premier et deuxième éléments annulaires (18, 19) présentent respectivement des pales (24, 25) s'étendant radialement, disposées de manière diamétralement opposée et limitant les chambres de pression (21, 22) dans la direction circonférentielle.

6. Convertisseur hydrodynamique (1) selon l'une quelconque des revendications 1 à 5, **caractérisé en ce que** des perçages (28) sont réalisés dans au moins un élément annulaire (18, 19), en particulier dans le deuxième élément annulaire (19), qui débouchent sur les chambres de pression (21, 22) pour la mise en pression, en particulier au niveau du diamètre extérieur.

7. Convertisseur hydrodynamique (1) selon l'une quelconque des revendications 2 à 6, **caractérisé en ce qu'**une bague d'ajustage est prévue qui est formée par le premier élément annulaire (18) ou est reliée au premier élément annulaire (18) de manière solidaire en rotation en tant que composant du dispositif de transmission (11), la bague d'ajustage étant disposée coaxialement à l'axe de rotation et couplée à ladite au moins une aube de réglage (8) pour transmettre une force de réglage ou un couple de réglage.

8. Convertisseur hydrodynamique (1) selon la revendication 7, **caractérisé en ce que** la bague d'ajustage présente au moins une came qui coopère avec une commande à manivelle, en particulier avec un élément à levier disposé radialement, la commande à manivelle étant couplée à l'aube de réglage (8).

9. Convertisseur hydrodynamique (1) selon la revendication 7, **caractérisé en ce que** le premier élément annulaire (18) ou la bague d'ajustage reliée à celui-ci présente une denture extérieure s'engrenant avec la denture extérieure d'une cheville de l'aube de réglage (8).

10. Convertisseur hydrodynamique (1) selon l'une quelconque des revendications 1 à 9, **caractérisé en ce que** l'aube de réglage (8) comprend une aube de réglage (8) ou une aube à plusieurs sections avec au moins un segment de torsion.

11. Convertisseur hydrodynamique (1) selon l'une quelconque des revendications 1 à 10, **caractérisé en ce que** le convertisseur hydrodynamique (1) est réalisé comme un convertisseur (1) sélectionné dans le groupe de convertisseurs (1) :
- des convertisseurs à un étage (1),
- des convertisseurs à plusieurs étages (1),
- des convertisseurs à une phase (1),
- des convertisseurs à plusieurs phases (1).

12. Convertisseur hydrodynamique (1) selon l'une quelconque des revendications 1 à 11, **caractérisé en ce qu'**il présente :
une roue de pompe (P) qui est traversée de l'intérieur vers l'extérieur en cours de fonctionnement ;
une roue de turbine (T) qui est traversée de l'extérieur vers l'intérieur en cours de fonctionnement ;
des premières aubes directrices dans le circuit d'écoulement vues entre la roue de pompe (P) et la roue de turbine (T) ;
des deuxièmes aubes directrices entre la roue de turbine (T) et la roue de pompe (P), dans lequel des premières et deuxièmes aubes directrices sont disposées sur différents stators (L1, L2) et sur différents diamètres, et les deuxièmes aubes directrices comprennent au moins une aube de réglage (8) ou un segment d'aube réglable (9).
